# EUROPÄISCHE PATENTANMELDUNG

(11) **EP 3 885 208 A1**
(43) Veröffentlichungstag der Anmeldung: **29.09.2021**
(21) Anmeldenummer: 20165956.2
(22) Anmeldetag: 26.03.2020
(51) Int. Cl.: B60S 1/60, B60S 1/02, B08B 7/02

(54) **REINIGUNGSEINRICHTUNG FÜR EINEN SCHEINWERFER, INSBESONDERE FAHRZEUGSCHEINWERFER**

(71) Anmelder: ZKW Group GmbH, 3250 Wieselburg (AT)
(72) Erfinder: Jackl, Christian, 3250 Wieselburg (AT); Pitterle, Georg, 3241 Kirnberg an der Mank (AT); Reiter, Thomas, 3325 Ferschitz (AT)
(74) Vertreter: Patentanwaltskanzlei Matschnig & Forsthuber OG

(57) **Zusammenfassung**

Die Erfindung betrifft eine Reinigungseinrichtung (10) für eine Abdeckscheibe (2) eines Scheinwerfers, insbesondere eines Fahrzeugscheinwerfers (1), wobei die Abdeckscheibe (2) an ihrer Außenseite (3) eine hydrophobe sowie Schmutz-abweisende Beschichtung (20) aufweist sowie zumindest ein Vibrationselement (11) an der zumindest einen Abdeckscheibe (2) befestigt ist, wobei das zumindest eine Vibrationselement (11) von einem Steuergerät (30) aktivierbar ist. Weiters wird im Rahmen der Erfindung ein Scheinwerfer, insbesondere Fahrzeugscheinwerfer (1), mit einer Reinigungseinrichtung (10) angegeben.

## Beschreibung

Die Erfindung betrifft eine Reinigungseinrichtung für eine Abdeckscheibe eines Scheinwerfers, insbesondere eines Fahrzeugscheinwerfers.

Aus dem Stand der Technik sind für Scheinwerfer, insbesondere für Kraftfahrzeugscheinwerfer, bereits unterschiedliche Reinigungseinrichtungen in zahlreichen Ausführungsformen bekannt. Beispielsweise sind bereits seit langem Scheinwerferreinigungsanlagen bekannt, bei denen eine Reinigungsflüssigkeit mittels Hochdruck von außen auf die eine oder die mehreren Abdeckscheiben eines Scheinwerfers gespritzt wird. Insbesondere bei Frontscheinwerfern eines Kraftfahrzeuges können solcherart Verunreinigungen der Abdeckscheibe zuverlässig entfernt werden. Nachteilig an solchen Scheinwerferreinigungsanlagen ist, dass diese aus zahlreichen Bauteilen und Komponenten bestehen, die fehleranfällig und wartungsintensiv sind. Bei solchen Hochdruckwaschanlagen, die meist einen hohen Verbrauch an Waschflüssigkeit haben, werden daher Vorratstanks mit mehreren Litern an Waschflüssigkeit benötigt. Als Waschflüssigkeit wird üblicherweise Wasser mit entsprechenden Zusatzmitteln wie im Sommer mit entsprechendem Insektenlöser oder im Winter mit einem geeigneten Frostschutz verwendet. Die Düsen einer solchen Hochdruckanlage spritzen das Wasser dabei mit Drücken bis zu 50 bar aus beweglichen Düsen von außen auf die Abdeckscheiben der Scheinwerfer. Bei Einsatz von ungeeigneten Zusatzmitteln können die Abdeckscheiben vorzeitig trüb werden, was ein weiterer Nachteil dieser vorbekannten Reinigungsanlagen ist. Bei Fahrzeugen, die mit derartigen Scheinwerferreinigungsanlagen ausgerüstet sind, wird vom Gesetzgeber auch deren Funktionstüchtigkeit überprüft. Fahrzeugbesitzer, die der hohe Wasserverbrauch ihrer Scheinwerferreinigungsanlage stört und diese daher deaktivieren lassen, riskieren damit die Löschung der Betriebserlaubnis ihres Fahrzeugs.

Überdies sind solche Scheinwerferreinigungsanlagen für Frontscheinwerfer aus Sicht des Fußgängerschutzes problematisch, da aufgrund der beweglich gelagerten Hochdruckreinigungsdüsen, die meist im Bereich des vorderen Stoßfängers integriert sind, die Verletzungsgefahr bei einem Zusammenstoß des Fahrzeugs mit einem Fußgänger ansteigt.

Seit langem bekannte Bürsten- oder Wischerreinigungssysteme, die während der Fahrt die Außenseiten der Abdeckscheiben von Scheinwerfern mechanisch reinigen, sind apparativ nochmals um ein Vielfaches aufwendiger und auch wartungsintensiver als die zuvor genannten Scheinwerferreinigungsanlagen mit einer Hochdruckpumpe. Weiters ist bei mechanisch wirkenden Reinigungsanlagen für Abdeckscheiben von Scheinwerfern der Verschleiß der Wischer und/oder Bürsten nach einer bestimmten Betriebsdauer nachteilig.

Die vorliegende Erfindung bezweckt daher, die aus dem Stand der Technik vorbekannten Nachteile für Reinigungsanlagen für Abdeckscheiben eines Scheinwerfers zu überwinden und dazu eine Reinigungseinrichtung anzugeben, die möglichst kostengünstig und kompakt mit möglichst wenigen Komponenten und Baugruppen konstruiert ist und die möglichst ohne Verschleiß und wartungsfrei die zumindest eine Abdeckscheibe eines Scheinwerfers, insbesondere eines Fahrzeugscheinwerfers, reinigen kann. Weiters ist es Aufgabe der Erfindung, eine Reinigungseinrichtung anzugeben, die im Betrieb möglichst ohne Einsatz von Waschflüssigkeit oder von anderen Verbrauchsmitteln auskommt.

Diese Aufgabe wird bei einer Reinigungseinrichtung gemäß dem Oberbegriff des Anspruches 1 mit den Merkmalen des kennzeichnenden Teiles des Anspruchs 1 gelöst.

Die Unteransprüche betreffen weitere vorteilhafte Ausgestaltungen der Erfindung.

Generell wird im Weiteren die Zuordnung der Begriffe hinsichtlich eines Ortes oder einer Orientierung, wie beispielsweise "horizontal", "vertikal", "in horizontaler Richtung", "in vertikaler Richtung", "oben", "unten", "vorne", "darunter", "darüber", "innen", "außen" etc. lediglich zur Vereinfachung gewählt und diese Begriffe beziehen sich möglicherweise auf die Darstellung in den Zeichnungen, nicht jedoch notwendigerweise auf eine aktuelle Gebrauchslage oder Position der Reinigungseinrichtung gemäß der Erfindung, deren Bestandteilen oder eines mit der Reinigungseinrichtung ausgestatteten Scheinwerfers.

Erfindungsgemäß weist bei einer Reinigungseinrichtung für zumindest eine Abdeckscheibe eines Scheinwerfers, insbesondere eines Fahrzeugscheinwerfers, die Abdeckscheibe an ihrer Außenseite eine hydrophobe sowie Schmutz-abweisende Beschichtung auf sowie ist zumindest ein Vibrationselement an der zumindest einen Abdeckscheibe befestigt, wobei das zumindest eine Vibrationselement von einem Steuergerät aktivierbar ist.

Vorteilhaft wirken bei einer erfindungsgemäßen Reinigungseinrichtung zur Reinigung einer oder mehrerer Abdeckscheiben eines Scheinwerfers, insbesondere eines Fahrzeugscheinwerfers, die folgenden Komponenten effizient zusammen:
(i) das zumindest eine Vibrationselement, welches an der zumindest einen Abdeckscheibe befestigt ist und welches von einem Steuergerät aktivierbar ist, sorgt dafür, dass die Abdeckscheibe des Scheinwerfers immer dann, wenn sich Verschmutzungen an der Außenseite der zumindest einen Abdeckscheibe abzusetzen beginnen bzw. wenn dies erforderlich ist, in Vibrationen versetzt wird und die Verunreinigungen damit von der Abdeckscheibe abgerüttelt werden können;
(ii) die hydrophobe sowie Schmutz-abweisende Beschichtung an der Außenseite der zumindest einen Abdeckscheibe sorgt dafür, dass Verschmutzungen in Form von Schmutzpartikeln oder Schmutzwasser aufgrund von minimierter Adhäsion an der beschichteten Außenseite der Abdeckscheibe nicht anhaften, sondern die Schmutzpartikel von der Abdeckscheibe abperlen.

Je nach Ausführung kann bei einer erfindungsgemäßen Reinigungseinrichtung das zumindest eine Vibrationselement direkt anliegend an der zumindest einen Abdeckscheibe befestigt sein oder das Vibrationselement kann auf einem weiteren Element wie etwa einem Gegengewicht angeordnet sein, wobei das darunter liegende Gegengewicht an der zumindest einen Abdeckscheibe befestigt ist. Auch in diesem Fall ist das Vibrationselement an der Abdeckscheibe befestigt, allerdings mit einer weiteren Lage wie beispielsweise einem Gegengewicht zwischen der Abdeckscheibe und dem Vibrationselement. Die Befestigung des Vibrationselements an der Abdeckscheibe bietet den Vorteil, dass die Schwingungen bzw. Vibrationen lokal in der Abdeckscheibe eingebracht werden und die Reinigung der Abdeckscheibe somit besonders effizient ist.

Das zumindest eine Vibrationselement kann dabei beispielsweise einen Ultraschallschwinger umfassen, der mit Frequenzen im Ultraschallbereich ab 16 kHz die Abdeckscheibe in Vibrationen versetzt und so für ein Abschütteln von Verunreinigungen beispielsweise in Form von Schmutzpartikeln, Wassertröpfchen oder Eisbelag von der Abdeckscheibe sorgt.

Als hydrophobe sowie Schmutz-abweisende Beschichtung können beispielsweise sogenannte Nano-Beschichtungen eingesetzt werden, die sich den Lotus-Effekt zu Nutze machen. Schmutz und Oberfläche erfahren hierbei sehr geringe Adhäsionskräfte. Feuchtesowie Schmutzpartikel werden dabei im abperlenden Wasser eingeschlossen und die Verschmutzung perlt einfach von der hydrophoben Beschichtung ab.

Ebenso können kratzfeste, wettergeschützte Beschichtungsmaterialien, die durch UV-Strahlung aushärten und die Schutz für Abdeckscheiben beispielsweise aus durchsichtigem Polycarbonat (PC) oder Polymethylmethacrylat (PMMA) gegen Abrieb, chemische Beschädigung, Abtragung bzw. Vergilben durch UV-Strahlung sowie gegen Verschmutzungen bieten, als hydrophobe sowie Schmutz-abweisende Beschichtung an der Außenseite der zumindest einen Abdeckscheibe aufgebracht sein. Solche Beschichtungen, die unter anderem als Wetterschutz für Abdeckscheiben dienen, werden auch als Silikon-Hardcoat bezeichnet. Beispielsweise wird ein solches Beschichtungsmaterial, das zum wetterfesten und Schmutz-abweisenden Beschichten von Abdeckscheiben von Fahrzeugscheinwerfern geeignet ist, von Momentive Performance Materials Inc. (www.momentive.com) unter dem Produktnamen SilFORT* UVHC5000 vertrieben.

Vorteilhaft kann bei einer Reinigungseinrichtung gemäß der Erfindung durch die Kombination der mit zumindest einem Vibrationselement ausgestatteten Abdeckscheibe, die überdies mit einer Schmutz-abweisenden Außenbeschichtung ausgerüstet ist, im durchschnittlichen Einsatzfall eines Scheinwerfers, insbesondere eines Fahrzeugscheinwerfers, auf den Einsatz von externer Waschflüssigkeit samt den dazu üblicherweise erforderlichen Flüssigkeitstanks und Apparaturen wie Pumpen, Zuleitungsschläuche und Waschdüsen zum Aufspritzen der Waschflüssigkeit auf die Abdeckscheiben verzichtet werden. Einerseits wird dadurch der Aufbau eines mit einer erfindungsgemäßen Reinigungseinrichtung ausgestatteten Scheinwerfers wesentlich vereinfacht gegenüber herkömmlichen Hochdruck-Scheinwerferreinigungsanlagen. Andererseits wird durch den Entfall von mechanisch beweglichen Teilen, die herkömmliche Scheinwerferreinigungsanlagen für Kraftfahrzeuge üblicherweise aufweisen, der Fußgängerschutz beim Einsatz einer erfindungsgemäßen Reinigungseinrichtung für einen Fahrzeugscheinwerfer deutlich erhöht.

Zweckmäßig kann in einer ersten Variante der Erfindung bei einer Reinigungseinrichtung das zumindest eine Vibrationselement mit einem an der zumindest einen Abdeckscheibe befestigten Gegengewicht gekoppelt sein.

In dieser Ausführung ist zumindest ein Gegengewicht an der Abdeckscheibe befestigt. Schwingungen des Vibrationselements, welches mit dem Gegengewicht gekoppelt ist, werden vom Vibrationselement auf das Gegengewicht und von diesem verstärkt direkt auf die Abdeckscheibe übertragen. Die vibrierende Wirkung des Vibrationselements wird als Resonanz des damit gekoppelten Gegengewichts verstärkt und somit die Reinigungswirkung der Abdeckscheibe weiter verbessert.

In einer besonders kompakten Weiterbildung der Erfindung kann bei der Reinigungseinrichtung das zumindest eine Vibrationselement mit dem Gegengewicht einstückig verbunden sein.

Im Weiteren wird die Kombination aus einem Vibrationselement, das mit einem Gegengewicht einstückig verbunden ist bzw. in einem Bauteil integriert ist, auch als Vibrationseinheit bezeichnet.

Diese kompakte Ausführung bietet den Vorteil, dass das Vibrationselement als eine geschlossene, gekapselte Vibrationseinheit mit einem Gehäuse ausgeführt werden kann, die nur mehr elektrisch kontaktiert werden muss. Je nach den Gegebenheiten und abhängig von der Größe der Abdeckscheibe, des zu reinigenden Bereichs der Abdeckscheibe sowie der Art und Menge an Verunreinigungen können erforderlichenfalls mehrere solcher Vibrationselemente an einer Abdeckscheibe befestigt sein. Die Ansteuerung der mehreren Vibrationselemente kann dabei zweckmäßig von einem einzigen Steuergerät erfolgen.

Von Vorteil kann es sein, wenn bei einer Reinigungseinrichtung gemäß der Erfindung das zumindest eine Vibrationselement mit der zumindest einen Abdeckscheibe durch Fügen dauerhaft verbunden ist.

Unter dem Begriff "Fügen" werden gemäß DIN 8593-1 unterschiedliche Fügeverfahren zusammengefasst. Beim Fügen werden zwei oder mehrere feste Körper, die Fügeteile, mit geometrisch bestimmter Gestalt dauerhaft miteinander verbunden bzw. gefügt. Bei manchen Fügeverfahren wird zusätzlich ein "formloser" Hilfsstoff, also ein Stoff, dessen Form nicht definiert ist, eingesetzt. Beispielsweise werden Klebstoffe als ein solcher Hilfsstoff verstanden.

Im gegenständlichen Fall kann das zumindest eine Vibrationselement mit der zumindest einen Abdeckscheibe beispielhaft durch folgende Fügeverfahren dauerhaft verbunden werden:
- durch Verkleben mit Klebstoff;
- durch Verschrauben mit Schrauben direkt durch die Abdeckscheibe oder mit einer Schraubhalterung an der Streuscheibe;
- durch formschlüssiges Heißverstemmen. Dabei wird durch thermoplastische Verformung die Abdeckscheibe zum Halter oder Adapter der Vibrationseinheit;
- durch Bajonettieren des Vibrationselements mit der Abdeckscheibe. Unter dem Begriff des Bajonettierens versteht der Fachmann ein Zusammensetzen bzw. Einrenken als geeignete Kombination und Abfolge aus Schieben und Drehen. Das Einrenken erfolgt meist durch eine lineare (translatorische) und anschließend rotatorische Bewegung. Eine Bajonett-Verbindung hält durch Formschluss, das Öffnen kann durch Überwinden von Haftreibung und/oder Federkraft und/oder dem Umgehen bzw. Öffnen einer Raststufe oder Sperre erfolgen;
- durch eine Spreizverbindung. Beim federnden Einspreizen wird das Fügeteil zunächst elastisch verformt. Nach dem Einlegen oder Einschieben erfolgt die elastische Rückfederung. Beispiele sind Klipverbindungen, Schnappverbindungen, Spreizringe, Blechfedern und Sicherungsringe, die zur Befestigung des zumindest einen Vibrationselements mit der Abdeckscheibe eingesetzt werden können.

In einer weiteren vorteilhaften Ausführung der Erfindung kann es zweckmäßig sein, wenn bei einer Reinigungseinrichtung das mit dem zumindest einen Vibrationselement gekoppelte Gegengewicht mit der zumindest einen Abdeckscheibe durch Fügen dauerhaft verbunden ist.

Die vorgenannten möglichen Ausführungsvarianten für Fügeverbindungen gelten gleichermaßen für ein oder mehrere Gegengewichte, die mit dem zumindest einen Vibrationselement gekoppelt sind, und die an der Abdeckscheibe befestigt sind.

Besonders zweckmäßig kann sein, wenn bei einer erfindungsgemäßen Reinigungseinrichtung das zumindest eine Vibrationselement in der zumindest einen Abdeckscheibe integriert ist.

In dieser Ausführung ist das zumindest eine Vibrationselement besonders effektiv vor Beschädigungen oder Witterungseinflüssen in der Abdeckscheibe integriert. Vibrationen des Vibrationselements, die vom Steuergerät aktiviert werden, werden vorteilhaft direkt an Ort und Stelle zur erwünschten Reinigung in die Abdeckscheibe eingeleitet. Vibrationsverluste werden somit zuverlässig vermieden. Ein oder mehrere Vibrationselemente können beispielsweise während des Herstellungsprozesses mittels Insert molding oder Injection molding durch Einlegen des Vibrationselements beim Spritzgussprozess in der Abdeckscheibe integriert werden.

In einer weiteren Ausführung der Erfindung kann es vorteilhaft sein, wenn bei einer Reinigungseinrichtung das zumindest eine Vibrationselement sowie das mit dem Vibrationselement gekoppelte Gegengewicht jeweils in der zumindest einen Abdeckscheibe integriert sind.

In dieser zweckmäßigen Weiterbildung der Erfindung können neben dem einen oder den mehreren Vibrationselementen auch noch weitere Bauelemente wie beispielsweise Bauteile, die als Gegengewicht dienen, direkt in die Abdeckscheibe eingebettet bzw. integriert werden. Bauteile, die aufgrund ihrer Schwungmasse als Gegengewicht dienen, haben den Vorteil, dass diese als Resonanzkörper für das Vibrationselement wirken und die Schwingungen des Vibrationselements entsprechend verstärken.

Besonders wirksam kann eine Reinigungseinrichtung gemäß der Erfindung sein, wenn zwei oder mehrere Vibrationselemente voneinander beabstandet an der zumindest einen Abdeckscheibe befestigt sind, wobei die zwei oder mehreren Vibrationselemente jeweils von einem Steuergerät aktivierbar sind.

Je nach den örtlichen Gegebenheiten und Anforderungen hinsichtlich der Reinigungsaufgaben können mehrere Vibrationselemente über die Fläche einer Abdeckscheibe verteilt angeordnet sein. Zweckmäßigerweise werden dazu Positionen der Vibrationselemente auf der Abdeckscheibe ausgewählt, die nicht direkt im optischen Strahlengang eines unter der Abdeckscheibe befindlichen Scheinwerfers angeordnet sind und die damit das erzeugte Lichtbild des Scheinwerfers nicht stören.

In einer Weiterbildung der Erfindung kann bei einer Reinigungseinrichtung jedem der zwei oder mehreren Vibrationselemente jeweils ein an der zumindest einen Abdeckscheibe befestigtes Gegengewicht zugeordnet sein.

In dieser Ausführung können die mehreren Vibrationselemente individuell gestaltet sein. So ist hier jedem Vibrationselement jeweils ein definiertes Gegengewicht zugeordnet. Neben der Gesamtmasse einer Vibrationseinheit, die variieren kann, können erforderlichenfalls auch die Dichte der Vibrationselemente je Flächenabschnitt der Abdeckscheibe variieren. Damit können beispielsweise Flächenabschnitte der Abdeckscheibe, die stärker einer Verschmutzung ausgesetzt sind, durch Einsatz mehrerer, eng nebeneinander angeordneter Vibrationselemente besonders effizient gereinigt werden

In einer Fortführung der Erfindung kann eine Reinigungseinrichtung weiterhin eine Antibeschlagvorrichtung umfassen, wobei die Antibeschlagvorrichtung an der Innenseite der zumindest einen Abdeckscheibe angeordnet ist und die Antibeschlagvorrichtung ausgewählt ist aus der Gruppe umfassend: eine Beschlag-hemmende Beschichtung, eine Heizfolie und/oder ein Heizelement mit Heizdrähten.

Diese Weiterbildung der erfindungsgemäßen Reinigungseinrichtung bietet den Vorteil, dass die Abdeckscheibe nicht nur an ihrer Außenseite vor äußeren Verunreinigungen und Witterungseinflüssen gereinigt werden kann, sondern zusätzlich auch an ihrer Innenseite. Unter der Innenseite ist die der Außenseite gegenüberliegende Seite der Abdeckscheibe zu verstehen, die in Einbaulage bei einem Scheinwerfer, insbesondere bei einem Fahrzeugscheinwerfer, zum Gehäuse des Scheinwerfers hin orientiert ist. Um bei feuchtem oder kaltem Wetter unerwünschte Kondensatbildung an der Scheibeninnenseite zu verhindern, ist in dieser Ausführungsform der Erfindung zumindest ein Abschnitt der Innenseite der Abdeckscheibe mit einer Beschlag-hemmenden Beschichtung ausgerüstet.

Solche als "Anti-fog" bezeichneten Beschichtungen sind beispielsweise für Abdeckscheiben aus durchsichtigem Polycarbonat (PC) oder Polymethylmethacrylat (PMMA) unter der Bezeichnung MODIPER® H vom Hersteller NOF Corporation (www.nof.co.jp) erhältlich.

Alternativ oder in Ergänzung zu einer zumindest abschnittsweise an der Scheibeninnenseite angeordneten, Beschlag-hemmenden Beschichtung können an der Innenseite der Abdeckscheibe auch eine Heizfolie und/oder ein Heizelement mit Heizdrähten, die in die Abdeckscheibe integriert sind, vorgesehen sein. Derartige elektrische Bauteile können zweckmäßig vom selben Steuergerät, welches zum Aktivieren des zumindest einen Vibrationselements dient, gesteuert und aktiviert werden. Bedarfsweise kann so rasch eine Kondensatbildung an der Scheibeninnenseite der Abdeckscheibe abgetrocknet werden. Besonders vorteilhaft kann sein, wenn bei einer Reinigungseinrichtung gemäß der Erfindung das zumindest eine Vibrationselement ein Ultraschallschwingungen erzeugender piezoelektrischer Vibrator ist.

Resonant betriebene Piezoaktoren, die zur Ultraschallerzeugung bei Frequenzen von 16 kHz bis 200 kHz dienen, bieten den Vorteil einer besonders kompakten Bauweise, was insbesondere beim Einsatz in möglichst klein bauenden Vibrationselementen bzw. in kompakten Vibrationseinheiten, die möglichst unauffällig an der Abdeckscheibe von Scheinwerfern bzw. von Fahrzeugscheinwerfern befestigt sind, von besonderer Bedeutung ist. Aufgrund der kleinen Baugröße solcher Piezoaktoren bzw. piezoelektrischer Vibratoren bieten sich diese auch dazu an, direkt in die Abdeckscheibe integriert zu werden, wodurch die Effizienz der Reinigungseinrichtung - wie vorhin bereits festgehalten - weiter erhöht werden kann.

Besonders effizient kann die Reinigungswirkung einer erfindungsgemäßen Reinigungseinrichtung weiter erhöht werden, wenn das Steuergerät mit einer Kamera und/oder mit einem Sensor, vorzugsweise einem optischen Sensor und/oder einem Feuchtigkeitssensor, zusammenwirkt.

Die signalmäßige Koppelung von der Reinigungseinrichtung bzw. von deren Steuergerät mit einer Kamera und/oder einem geeigneten Sensor, die die Verschmutzung der Abdeckscheibe erkennen, bietet den Vorteil, dass die Reinigungseinrichtung bedarfsweise selbsttätig aktiviert wird. Beispielsweise kann im Falle eines Kraftfahrzeugs von einer Kamera erkannt werden, ob die aktuellen Witterungsbedingungen beispielsweise während eines Regen- oder Schneefalls eine Reinigung der Abdeckscheibe des Scheinwerfers erforderlich machen.

Je nach Einsatzgebiet und Witterung kann es zweckmäßig sein, wenn bei einer Reinigungseinrichtung gemäß der Erfindung die Aktivierung des zumindest einen Vibrationselements vom Steuergerät aus nach einem Aktivierungsschema erfolgt, welches ausgewählt ist aus der Gruppe umfassend: zyklisch wiederkehrende Aktivierung, manuelle Aktivierung, Aktivierung mittels eines Sensorsignals, Aktivierung mittels eines Kamerasignals.

Beispielhaft sind die folgenden Varianten zur Aktivierung des zumindest einen Vibrationselements jeweils vom Steuergerät aus denkbar:
- zyklisch wiederkehrend: in definierten Zeitabständen wird das zumindest eine Vibrationselement aktiviert, unabhängig von den vorhandenen Verhältnissen (Nässe, Verschmutzung, etc.)
- mittels einer manuellen Aktivierung: beispielsweise kann bei einem Fahrzeug die Aktivierung des zumindest einen Vibrationselements der Reinigungseinrichtung in Kombination mit der Aktivierung der Windschutzscheibenreinigung, des "Scheibenwischers", erfolgen. Das Steuergerät erhält dazu ein Signal der Windschutzscheibenreinigung, woraufhin ein Vibrationselement der Reinigungseinrichtung aktiviert wird.
- mittels Regensensor an der Windschutzscheibe oder an der Abdeckscheibe eines Fahrzeugs wird das Vibrationselement aktiviert.
- mittels einer Kamera im Scheinwerfer wird die Verschmutzung der Abdeckscheibe erkannt.

Weiters ist im Rahmen der Erfindung vorgesehen, dass das zumindest eine Vibrationselement der Reinigungseinrichtung vom Steuergerät aus bei unterschiedlichen Frequenzen und/oder Amplituden und/oder Zeitintervallen und/oder Zeitdauern aktiviert und betrieben werden kann. Damit können mit der Reinigungseinrichtung unterschiedliche Reinigungsprogramme eingestellt werden, um damit möglichst an die jeweilige individuelle Reinigungsaufgabe angepasst die mit der Reinigungseinrichtung ausgestattete Abdeckscheibe möglichst effizient reinigen zu können. Beispielsweise kann es zweckmäßig sein, wenn die Reinigung der Abdeckscheibe bei trockener Witterung mit einer beispielhaft größeren Frequenz und Amplitude der Schwingungen des zumindest einen Vibrationselements abläuft als während der Reinigung bei Regenwetter. Bei nasser, feuchter Witterung mit Niederschlag kann es beispielsweise ausreichen, wenn die Reinigung der Abdeckscheibe zum Abrütteln von Regentropfen und Nässe mit einer vergleichsweise niedrigeren Frequenz und einer kleineren Amplitude der Schwingungen des einen oder der mehreren Vibrationselemente abläuft als dies bei trockener Witterung zweckmäßig ist.

Die zuvor genannte Aufgabe wird in einer Weiterbildung der Erfindung ebenso von einem Scheinwerfer, insbesondere einem Fahrzeugscheinwerfer, gelöst, welcher zumindest eine Abdeckscheibe umfasst, und der mit einer erfindungsgemäßen Reinigungseinrichtung zum Reinigen der zumindest einen Abdeckscheibe ausgerüstet ist.

Die vorstehend genannten Vorteile der erfindungsgemäßen Reinigungseinrichtung gelten gleichermaßen auch für einen mit einer Reinigungseinrichtung ausgestatteten Scheinwerfer, insbesondere einen Fahrzeugscheinwerfer. In der vorliegenden Anmeldung wird der Einfachheit halber jeweils von einer Reinigungseinrichtung gesprochen. Selbstredend sind von der Erfindung auch Scheinwerfer umfasst, die mehrere Reinigungseinrichtungen aufweisen. Ebenso sind vom Begriff einer Reinigungseinrichtung unterschiedliche Ausführungen mit einer oder auch mit mehreren Vibrationselementen umfasst.

Im Rahmen der Erfindung wird weiters ein Fahrzeug angegeben mit zumindest einem Scheinwerfer, insbesondere einem Fahrzeugscheinwerfer, der mit einer erfindungsgemäßen Reinigungseinrichtung zum Reinigen der zumindest einen Abdeckscheibe des Scheinwerfers ausgestattet ist.

Die vorgenannten Vorteile und vorteilhaften Wirkungen der Erfindung gelten gleichermaßen auch für ein Fahrzeug, das mit einem oder mit mehreren Scheinwerfern mit einer erfindungsgemäßen Reinigungseinrichtung ausgerüstet sind.

Weitere Einzelheiten, Merkmale und Vorteile der Erfindung ergeben sich aus der nachfolgenden Erläuterung von in den Zeichnungen schematisch dargestellten Ausführungsbeispielen der Erfindung. In den Zeichnungen zeigen:
- **Fig. 1** in einer isometrischen Ansicht schräg von vorne einen Fahrzeugscheinwerfer mit einer ersten Ausführung einer Reinigungseinrichtung gemäß der Erfindung;
- **Fig. 2** in einer teilweisen Schnittansicht von der Seite das in Fig. 1 markierte Detail A einer Reinigungseinrichtung;
- **Fig. 3** in einer isometrischen Ansicht schräg von oben eine an einer Abdeckscheibe befestigte Reinigungseinrichtung mit einer Vibrationseinheit, in der ein Vibrationselement samt einem Gegengewicht integriert sind;
- **Fig. 4** in einer teilweisen Schnittansicht von der Seite ein Detail einer Vibrationseinheit, die in einer Abdeckscheibe integriert ist;
- **Fig. 5** in einer isometrischen Ansicht schräg von oben eine Abdeckscheibe mit einer daran befestigten Reinigungseinrichtung in einer weiteren Ausführungsvariante;
- **Fig. 6** in einer Draufsicht einen Fahrzeugscheinwerfer mit einer Abdeckscheibe mit einer Reinigungseinrichtung gemäß der Erfindung, wobei mehrere Vibrationselemente in der Abdeckscheibe integriert sind;
- **Fig. 7** in einer teilweisen Schnittansicht von der Seite eine weitere Variante einer Reinigungseinrichtung gemäß der Erfindung samt dem zugehörigen Steuerungssystem;
- **Fig. 8** in einer teilweisen Schnittansicht von der Seite eine alternative Variante einer Reinigungseinrichtung gemäß der Erfindung samt dem zugehörigen Steuerungssystem.

Im Folgenden nun die detaillierte Figurenbeschreibung:

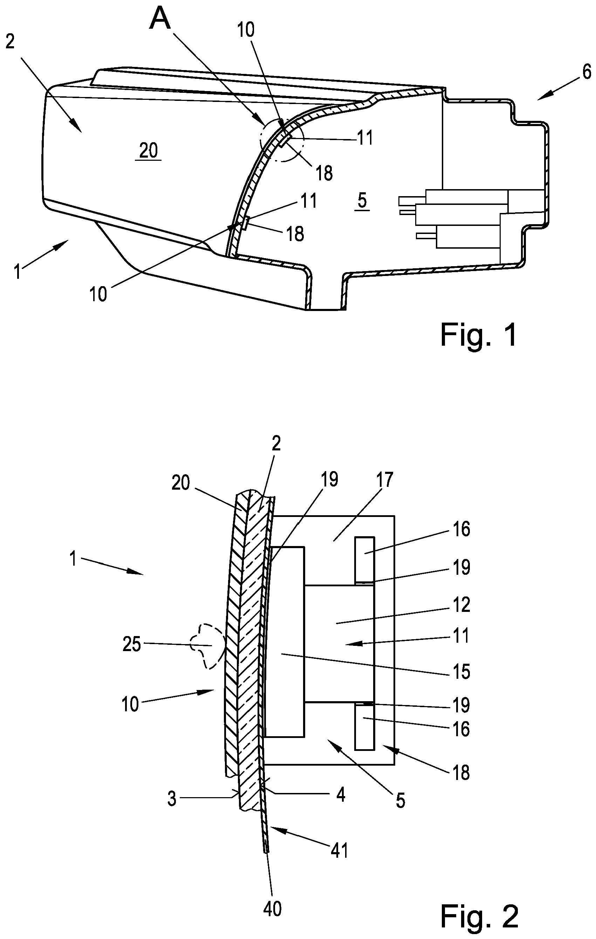

**Fig. 1** zeigt einen Fahrzeugscheinwerfer 1 mit einer ersten Ausführung einer Reinigungseinrichtung 10 gemäß der Erfindung. Der hier dargestellte Fahrzeugscheinwerfer 1 umfasst eine Abdeckscheibe 2, die beispielsweise aus durchsichtigem Polycarbonat (PC) oder Polymethylmethacrylat (PMMA) hergestellt ist. Die Abdeckscheibe 2 weist eine Außenseite 3 sowie eine der Außenseite 3 gegenüberliegende Innenseite 4 auf. Die Außenseite 3 der Abdeckscheibe 2 ist in Einbaulage des Fahrzeugscheinwerfers 1 Umwelteinflüssen ausgesetzt. Die Innenseite 4 der Abdeckscheibe 2 ist in Einbaulage zu einem Innenraum 5 des Fahrzeugscheinwerfers 1 orientiert, der von außer von der Abdeckscheibe 2 von einem Gehäuse 6 gebildet wird.

Eine Reinigungseinrichtung 10 gemäß der Erfindung für die Abdeckscheibe 2 des Fahrzeugscheinwerfers 1 umfasst zumindest ein Vibrationselement 11, das an der Abdeckscheibe 2 befestigt ist. Das Vibrationselement 11 kann zweckmäßig in einer Vibrationseinheit 18 eingebaut bzw. in diese integriert sein.

**Fig. 2** stellt das in Fig. 1 markierte Detail A einer Reinigungseinrichtung 10 dar. In Fig. 2 ist eine solche Vibrationseinheit 18 in einer teilweisen Schnittansicht dargestellt. Innerhalb der Vibrationseinheit 18 befindet sich zumindest ein Vibrationselement 11, welches von einem hier nicht explizit gezeigten Steuergerät aus aktivierbar ist. Das Vibrationselement 11 ist hier beispielsweise als Piezoelement 12 bzw. als piezoelektrischer Vibrator 12 ausgeführt. Der piezoelektrische Vibrator 12 ist ein resonant betriebener Piezoaktor, der zur Ultraschallerzeugung bei Frequenzen von 16 kHz bis 200 kHz dient. Der piezoelektrische Vibrator 12 ist hier in dieser Ausführung einerseits auf einem Gegengewicht 15 befestigt und andererseits mittels einer Halterung 16 in einem Gehäuse 17 der Vibrationseinheit 18 befestigt. Das Gehäuse 17 der Vibrationseinheit 18 umhaust auch das Gegengewicht 15. Mittels Klebstoff 19 oder Klebefolien 19 ist das Gegengewicht 15 an der Innenseite 4 der Abdeckscheibe 2 angeklebt. Ebenso ist die Vibrationseinheit 18 auf dem Gegengewicht 15 sowie an den Halterungen 16 im Gehäuse 17 mit Klebstoff 19 festgeklebt. Die Vibrationseinheit 18 samt Gehäuse 17 bietet den Vorteil einer geschlossenen, gekapselten Bauweise, die an Ort und Stelle an der Abdeckscheibe 2 befestigt werden kann und die nur mehr elektrisch kontaktiert werden muss.

Eine Reinigungseinrichtung 10 gemäß der Erfindung umfasst weiters eine hydrophobe, Schmutz-abweisende Beschichtung 20, die an der Außenseite 3 der Abdeckscheibe 2 aufgebracht ist und die verhindert, dass Verunreinigungen 25, beispielsweise Schmutzpartikel, Schmutzwasser oder auch Vereisungen, an der Außenseite 3 der Abdeckscheibe 2 anhaften bzw. haften bleiben.

Als außenseitige Schmutz-abweisende Beschichtung 20, die als Wetterschutz für die Abdeckscheibe 2 dient, wird hier eine Silikon-Hardcoat Beschichtung verwendet. Die Beschichtungsstärke dieser Silikon-Hardcoat Beschichtung beträgt beispielsweise von 8 bis 12µm.
Zusätzlich ist an der Innenseite 4 der Abdeckscheibe 2 eine Antibeschlagvorrichtung 40 in Form einer Beschlag-hemmenden Beschichtung 41 angebracht.

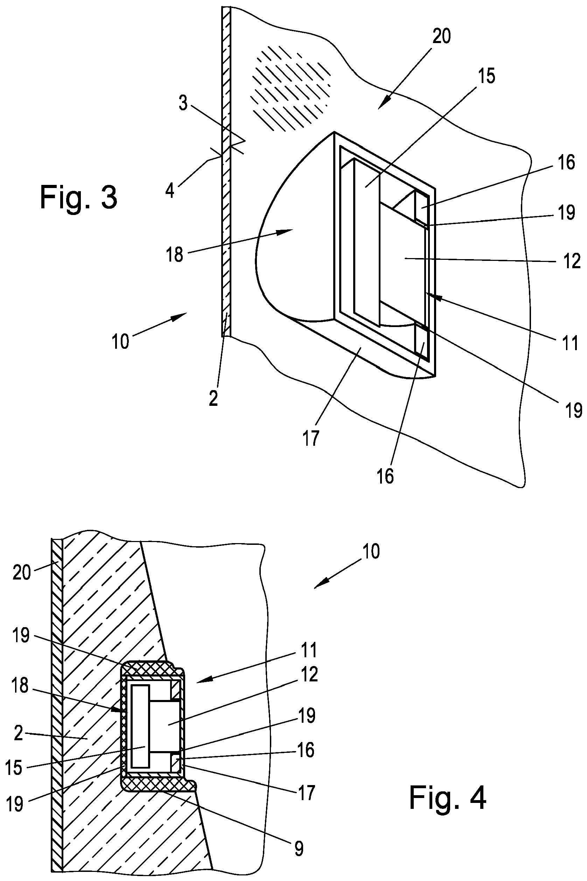

**Fig. 3** zeigt eine an einer Abdeckscheibe 2 befestigte Reinigungseinrichtung 10 mit einer Vibrationseinheit 18, in der innerhalb des Gehäuses 17 ein Vibrationselement 11 samt einem Gegengewicht 15 integriert sind. Die Vibrationseinheit 18 ist mittels eine Klebeschicht 19 an der Innenseite 4 der Abdeckscheibe 2 angeklebt. Das Vibrationselement 11 in Form eines Piezoelements 12 ist hier mit dem Gegengewicht 15 verbunden. Sowohl das Gegengewicht 15, als auch das Vibrationselement 11 grenzen innerhalb des Gehäuses 17 direkt an die Abdeckscheibe 2 an. Vibrationen der Vibrationseinheit 18 werden somit besonders effizient direkt und unmittelbar in die Abdeckscheibe 2 eingeleitet. Verschmutzungen, die an der mit einer hydrophoben Beschichtung 20 versehenen Außenseite 3 der Abdeckscheibe 2 anhaften sollten, können somit bei Bedarf besonders wirksam mittels der resonanten Schwingungen des piezoelektrischen Vibrators 12 abgerüttelt werden.

**Fig. 4** zeigt ein Detail einer Vibrationseinheit 18, die in einer Abdeckscheibe 2 integriert ist. Die Vibrationseinheit 18 ist hier in einer Vertiefung 9 in der Abdeckscheibe 2 eingebettet. Die Kavität wurde anschließend nach dem Einbetten der Vibrationseinheit mit einem glasklar aushärtenden Kleber 19 ausgefüllt.

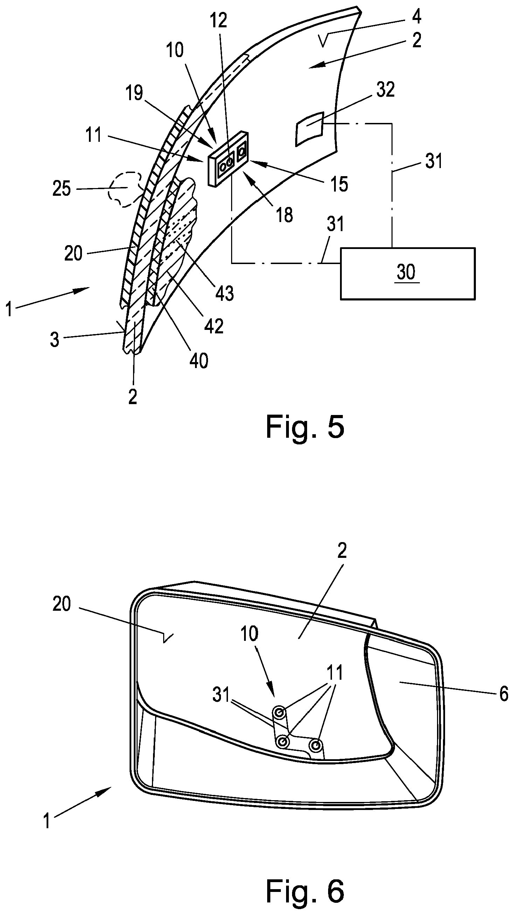

**Fig. 5** zeigt eine Abdeckscheibe 2, an der eine weitere Ausführungsvariante einer erfindungsgemäßen Reinigungseinrichtung 10 daran befestigt ist. Die hier schematisch dargestellte Vibrationseinheit 18 ist einem sehr flachen Gehäuse 17 untergebracht, wobei das Vibrationselement 11 in Form eines piezoelektrischen Vibrators 12 und das Gegengewicht 15 miteinander gekoppelt sowie nebeneinander innerhalb des Gehäuses 17 angeordnet sind. Die Außenseite 3 der Abdeckscheibe 2 weist eine hydrophobe Beschichtung 20 auf. Die Innenseite 4 der Abdeckscheibe 2 weist eine Antibeschlagvorrichtung 40 in Form einer Heizfolie 42 mit mehreren Heizdrähten auf, die in die Abdeckscheibe 2 integriert sind.

**Fig. 6** zeigt einen Fahrzeugscheinwerfer 1 mit einer Abdeckscheibe 2 mit einer Reinigungseinrichtung 10 gemäß der Erfindung, wobei mehrere Vibrationselemente 11 in der Abdeckscheibe 2 integriert sind. Die einzelnen Vibrationselemente 11 sind mit Signalleitungen 31 mit einem nicht explizit dargestellten Steuergerät verbunden und können gemeinsam vom Steuergerät aus aktiviert werden.

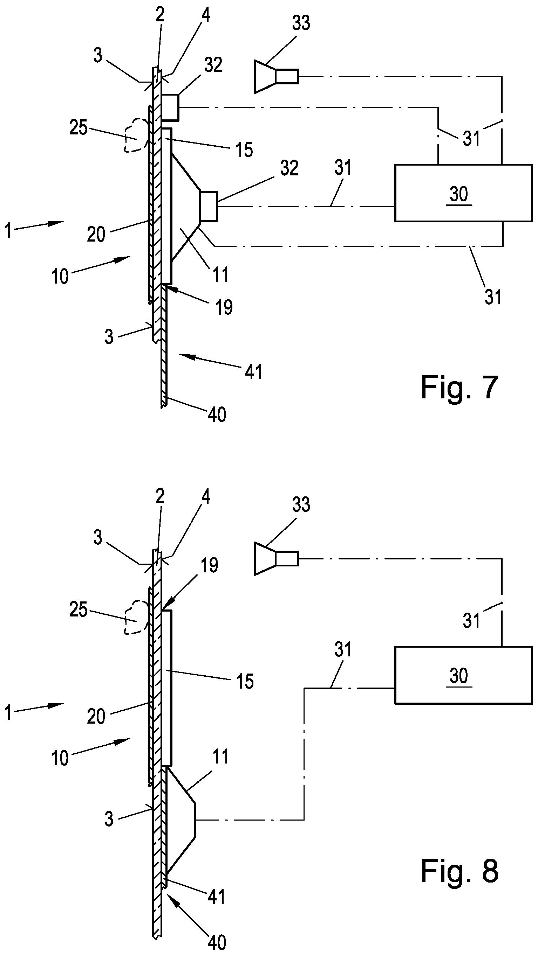

**Fig. 7** stellt schematisch eine weitere Variante einer Reinigungseinrichtung 10 gemäß der Erfindung samt dem zugehörigen Steuerungssystem dar. In dieser Ausführung wird ein Detail eines Kraftfahrzeugscheinwerfers 1 gezeigt, wobei die Abdeckscheibe 2 mit einer außenseitigen hydrophoben Beschichtung 20 ausgerüstet ist. An der Innenseite 4 der Abdeckscheibe 2 ist hier ein plattenförmiges Gegengewicht 15 mittels einer Klebeschicht 19 befestigt. Auf dem Gegengewicht 15 ist ein Vibrationselement 11 befestigt. Die Innenseite 4 ist weiters mit einer Antibeschlagvorrichtung 40 beispielsweise in Form einer Beschlag-hemmenden Beschichtung 41 vor unerwünschter Kondensatbildung geschützt. Ein Steuergerät 30 dient zur Aktivierung des Vibrationselements 11. Das Steuergerät ist dazu mittels Signalleitungen 31 mit dem Vibrationselement 11 bzw. mit einem mit dem Vibrationselement 11 gekoppelten Bewegungssensor 32 verbunden. Mittels einer Kamera 33, die im Innenraum 5 des Scheinwerfers 1 angeordnet ist und die ebenfalls mit einer Signalleitung 31 mit dem Steuergerät 30 verbunden ist, werden Verschmutzungen oder Regentropfen an der Abdeckscheibe 2 erkannt. Die Aktivierung des Vibrationselements 11 erfolgt somit durch das Steuergerät 30 nach Erhalt eines Signals der Kamera 33. Der Bewegungssensor 32 dient hier zur Kontrolle der Funktionstüchtigkeit des Vibrationselements 11.

Alternativ oder in Ergänzung zu einer Kamera 33 können auch ein oder mehrere Sensoren 32, beispielsweise optischen Sensoren oder Feuchtigkeitssensoren, zur Aktivierung des zumindest einen Vibrationselements 11 dienen. Derartige Sensoren 32, beispielsweise Regensensoren, sind dazu direkt an der Abdeckscheibe 2 befestigt oder sind in diese integriert. Eine Kamera 33, die im Innenraum 5 des Fahrzeugscheinwerfers 1 positioniert ist und deren Empfindlichkeit programmiert werden kann, ab wann eine Verschmutzung als solche erkannt wird und ein entsprechendes Kamerasignal an das Steuergerät 30 ausgesendet wird, bietet den Vorteil, dass sie bei lokal auftretender Verschmutzung 25 funktionsfähig bleibt. Ein einzelner kleiner Sensor 32, der an der Abdeckscheibe 2 befestigt ist, kann durch lokal auftretende, starke Verschmutzungen 25 an der Abdeckscheibe 2 maskiert werden und funktioniert dann unter Umständen nicht. Aus diesem Grund ist es zweckmäßig, bei einer Aktivierung der Reinigungseinrichtung 10 mittels Sensoren 32 und ohne Einsatz einer Kamera eine redundante, möglichst ausfallsichere Aktivierung der Reinigungseinrichtung 10 vorzusehen. Dies kann erzielt werden, in dem mehrere Sensoren 32 an unterschiedlichen Stellen der Abdeckscheibe 2 positioniert sind. Für den Fall, dass ein einzelner Sensor 32, insbesondere ein optischer Sensor, aufgrund von lokaler Verschmutzung temporär nicht funktioniert, so kann von den weiteren, parallel geschalteten Sensoren 32 dennoch das Vibrationselement 11 mittels des Steuergeräts 30 aktiviert werden.

**Fig. 8** zeigt eine weitere, alternative Variante einer Reinigungseinrichtung 10 gemäß der Erfindung samt dem zugehörigen Steuerungssystem. Im Unterschied zu Fig. 7 sind hier in Fig. 8 das Gegengewicht 15 und das Vibrationselement 11 miteinander gekoppelt sowie nebeneinander an der Innenseite 4 der Abdeckscheibe 2 befestigt. Wiederum dient ein Steuergerät 30 zur Aktivierung des Vibrationselements 11. Das Steuergerät ist dazu mittels Signalleitungen 31 mit dem Vibrationselement 11 verbunden. Mittels einer Kamera 33, die im Innenraum 5 des Scheinwerfers 1 angeordnet ist und die ebenfalls mit einer Signalleitung 31 mit dem Steuergerät 30 verbunden ist, werden Verschmutzungen oder Regentropfen an der Abdeckscheibe 2 erkannt. Die Aktivierung des Vibrationselements 11 erfolgt somit durch das Steuergerät 30 nach Erhalt eines Signals der Kamera 33.

### LISTE DER BEZUGSZEICHEN

- 1: Fahrzeugscheinwerfer
- 2: Abdeckscheibe
- 3: Außenseite der Abdeckscheibe
- 4: Innenseite der Abdeckscheibe
- 5: Innenraum des Fahrzeugscheinwerfers
- 6: Gehäuse des Fahrzeugscheinwerfers
- 9: Vertiefung in Abdeckscheibe
- 10: Reinigungseinrichtung
- 11: Vibrationselement
- 12: Piezoelement, piezoelektrischer Vibrator
- 15: Gegengewicht
- 16: Halterung
- 17: Gehäuse der Vibrationseinheit
- 18: Vibrationseinheit
- 19: Klebstoff
- 20: hydrophobe Beschichtung
- 25: Verunreinigung, Schmutzpartikel
- 30: Steuergerät
- 31: Signalleitung
- 32: Sensor
- 33: Kamera
- 40: Antibeschlagvorrichtung
- 41: Beschlag-hemmende Beschichtung
- 42: Heizfolie
- 43: Heizdraht

## Patentansprüche

1. Einrichtung (10) für die Reinigung zumindest einer Abdeckscheibe (2) eines Scheinwerfers, insbesondere eines Fahrzeugscheinwerfers (1),
**dadurch gekennzeichnet, dass**
zumindest ein Vibrationselement (11) an der zumindest einen Abdeckscheibe (2) befestigt ist, wobei das zumindest eine Vibrationselement (11) von einem Steuergerät (30) aktivierbar ist, wobei die Abdeckscheibe (2) an ihrer Außenseite (3) eine hydrophobe sowie Schmutz-abweisende Beschichtung (20) aufweist.

2. Reinigungseinrichtung (10) nach Anspruch 1, **dadurch gekennzeichnet, dass** das zumindest eine Vibrationselement (11) mit einem an der zumindest einen Abdeckscheibe (2) befestigten Gegengewicht (15) gekoppelt ist.

3. Reinigungseinrichtung (10) nach Anspruch 2, **dadurch gekennzeichnet, dass** das zumindest eine Vibrationselement (11) mit dem Gegengewicht (15) einstückig verbunden ist.

4. Reinigungseinrichtung (10) nach einem der Ansprüche 1 bis 3, **dadurch gekennzeichnet, dass** das zumindest eine Vibrationselement (11) mit der zumindest einen Abdeckscheibe (2) durch Fügen dauerhaft verbunden ist.

5. Reinigungseinrichtung (10) nach einem der Ansprüche 2 bis 4, **dadurch gekennzeichnet, dass** das mit dem zumindest einen Vibrationselement (11) gekoppelte Gegengewicht (15) mit der zumindest einen Abdeckscheibe (2) durch Fügen dauerhaft verbunden ist.

6. Reinigungseinrichtung (10) nach einem der Ansprüche 1 bis 5, **dadurch gekennzeichnet, dass** das zumindest eine Vibrationselement (11) in der zumindest einen Abdeckscheibe (2) integriert ist.

7. Reinigungseinrichtung (10) nach einem der Ansprüche 2 bis 6, **dadurch gekennzeichnet, dass** das zumindest eine Vibrationselement (11) sowie das mit dem Vibrationselement (11) gekoppelte Gegengewicht (15) jeweils in der zumindest einen Abdeckscheibe (2) integriert sind.

8. Reinigungseinrichtung (10) nach einem der Ansprüche 1 bis 7, **dadurch gekennzeichnet, dass** zwei oder mehrere Vibrationselemente (11) voneinander beabstandet an der zumindest einen Abdeckscheibe (2) befestigt sind, wobei die zwei oder mehreren Vibrationselemente (11) jeweils von einem Steuergerät (30) aktivierbar sind.

9. Reinigungseinrichtung (10) nach Anspruch 8, **dadurch gekennzeichnet, dass** jedem der zwei oder mehreren Vibrationselemente (11) jeweils ein an der zumindest einen Abdeckscheibe (2) befestigtes Gegengewicht (15) zugeordnet ist.

10. Reinigungseinrichtung (10) nach einem der Ansprüche 1 bis 9, weiterhin umfassend eine Antibeschlagvorrichtung (40), **dadurch gekennzeichnet, dass** die Antibeschlagvorrichtung (40) an der Innenseite (4) der zumindest einen Abdeckscheibe (2) angeordnet ist und die Antibeschlagvorrichtung (40) ausgewählt ist aus der Gruppe umfassend: eine Beschlag-hemmende Beschichtung (41), eine Heizfolie (42) und/oder ein Heizelement mit Heizdrähten (43).

11. Reinigungseinrichtung (10) nach einem der Ansprüche 1 bis 10, **dadurch gekennzeichnet, dass** das zumindest eine Vibrationselement (11) ein Ultraschallschwingungen erzeugender piezoelektrischer Vibrator (12) ist.

12. Reinigungseinrichtung (10) nach einem der Ansprüche 1 bis 11, **dadurch gekennzeichnet, dass** das Steuergerät (30) mit einer Kamera (33) und/oder mit einem Sensor (32), vorzugsweise einem optischen Sensor oder einem Feuchtigkeitssensor, zusammenwirkt.

13. Reinigungseinrichtung (10) nach einem der Ansprüche 1 bis 12, **dadurch gekennzeichnet, dass** die Aktivierung des zumindest einen Vibrationselements (11) vom Steuergerät (30) aus erfolgt nach einem Aktivierungsschema, welches ausgewählt ist aus der Gruppe umfassend: zyklisch wiederkehrende Aktivierung, manuelle Aktivierung, Aktivierung mittels eines Sensorsignals, Aktivierung mittels eines Kamerasignals.

14. Scheinwerfer, insbesondere Fahrzeugscheinwerfer (1), umfassend zumindest eine Abdeckscheibe (2), mit einer Reinigungseinrichtung (10) nach einem der Ansprüche 1 bis 13 zum Reinigen der zumindest einen Abdeckscheibe (2).

15. Fahrzeug mit zumindest einem Scheinwerfer gemäß Anspruch 14.
